(19) Europäisches Patentamt
European Patent Office
Office européen des brevets

(11) **EP 4 727 054 A1**

(12) **EUROPEAN PATENT APPLICATION**

(43) Date of publication:
**15.04.2026 Bulletin 2026/16**

(21) Application number: **25207532.0**

(22) Date of filing: **08.10.2025**

(51) International Patent Classification (IPC):
*H04L 9/08* (2006.01)

(52) Cooperative Patent Classification (CPC):
**H04L 9/0844; H04W 12/033**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **11.10.2024 US 202463706293 P**
**28.03.2025 US 202519094608**

(71) Applicant: **Avago Technologies International Sales
Pte. Limited
Singapore 768923 (SG)**

(72) Inventors:
• **Bhandaru, Nehru
Irvine, 92618 (US)**
• **Derham, Thomas
Irvine, 92618 (US)**

(74) Representative: **Dilg, Haeusler, Schindelmann
Patentanwaltsgesellschaft mbH
Leonrodstraße 58
80636 München (DE)**

(54) **WIRELESS DEVICE WITH NONCE MANAGEMENT AND A DYNAMIC DIFFIE-HELLMAN KEY EXCHANGE**

(57) A wireless device supports roaming to a second access point if signal strength falls below a threshold or a connection is disrupted. The wireless device generates nonce values used for encryption and/or to protect against a replay attack. The nonce values a generated according to rules designed to minimize nonce reuse after roaming within a mobility domain. The wireless device may also be configured to generate encryption keys with a device of the mobility domain before a connection is established. The encryption keys are used after roaming to encrypt the earliest data frames sent after the roam.

FIG. 2A

EP 4 727 054 A1

## Description

### BACKGROUND

The present disclosure relates to encryption technology.

The present disclosure relates in particular to encryption of wireless communications to and/or from access points used in a network. In some embodiments, the present disclosure relates to encryption during roaming between access points used in a network.

Networks may include more than one access point to which a device may connect based on signal strength at a particular location. As the device changes location, the device may connect to a different access point. Secure communication may be provided by encryption before and after the change to a different access point.

### BRIEF DESCRIPTION OF THE DRAWINGS

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.

FIG. 1A is a block diagram depicting a network environment including one or more access points in communication with one or more devices or stations, according to some embodiments.

FIG. 1B is a block diagrams depicting computing devices useful in connection with the methods and systems described herein, according to some embodiments.

FIG. 1C is another block diagrams depicting computing devices useful in connection with the methods and systems described herein, according to some embodiments.

FIG. 2A is a block diagram of a wireless device configured with nonce reuse management and a dynamic Diffie-Hellman algorithm, according to some embodiments.

FIG. 2B is another block diagrams depicting a network environment using mobility domains, according to some embodiments.

FIG. 3A is diagram illustrating components of nonces generated by the wireless device of FIG 2A, according to some embodiments.

FIG. 3B is another diagram illustrating components of nonces generated by the wireless device of FIG 2A, according to some embodiments.

FIG. 4A is a swimlane diagram depicting messages sent between wireless devices before and after roaming to a second access point, according to some embodiments.

FIG. 4B is another swimlane diagram depicting messages sent between wireless devices before and after roaming to a second access point, according to some embodiments.

FIG. 5A is a flow of operations for generating a nonce value, according to some embodiments.

FIG. 5B is another flow of operations for generating a nonce value, according to some embodiments.

FIG. 6 is a flow of operations performed by a roaming wireless device for encrypting the first messages after roaming to a second access point, according to some embodiments.

FIG. 7 is a flow of operations performed by an access point for encrypting the first messages after roaming to a second access point, according to some embodiments.

### DETAILED DESCRIPTION

The following IEEE standard(s), including any draft versions of such standard(s), are hereby incorporated herein by reference in their entirety and are made part of the present disclosure for all purposes: Wi-Fi Alliance standards and IEEE 802.11 standards including but not limited to IEEE 802.11a™, IEEE 802.11b™, IEEE 802.11g™, IEEE P802.11n™; IEEE P802.11ac™; and IEEE P802.11be™ through IEEE P802.11bn™ standards. Although this disclosure can reference aspects of these standard(s), the disclosure is in no way limited by these standard(s).

Some embodiments of the present disclosure relate to a wireless device. The wireless device may be an access point configured to provide access to a network or the wireless device may be a client device connecting to the access point to gain access to the network. The network may have more than one wireless access point in some embodiments, forming a mobility domain within which client devices are able to roam (e.g., switch connection points) from one access point to another to achieve improved data transfer. For example, the client device may roam to a second access point if the signal strength of the first access point to which the client device is connected drops below a particular threshold or is disconnected.

Wireless communications often are encrypted to prevent understanding by a third party that may receive the transmission. Security is provided using nonce values that are expected to not be repeated within a communication session. The nonce values may be combined with a transient key (e.g., a pairwise transient key) generated by the client device and the access point to generate an encryption key (e.g., a temporal key) that can be used to encrypt data. Nonce values may also be used during encrypted data transfer to prevent replay attacks. To maintain high levels of security a nonce value should not be reused with the same transient key in some embodiments.

Nonce values often include information related to the specific access point and the packet number. While roaming within a mobility domain, if the client device leaves an access point and then returns to the original access point within the same session, the packet number may be reset causing potential reuse of a nonce value. Systems and methods generate nonce values in both a centralized and distributed nonce management configuration in some embodiments. In some embodiments, the direction of the data flow, the type of data frame, a bit sequence based on the access point MAC address, and/or a roam counter are included in nonce value generation allowing for more flexibility in generation of the nonce value and reducing the probability of a repeated nonce value within the same session.

Roaming to another access point often requires renegotiation of transient keys to establish a connection. These early messages when security parameters are negotiated may be exploited by a third-party increasing risk for unauthorized behavior on the network. Systems and methods negotiate security parameters for a second access point of the mobility domain through the access point to which the client device is currently connected in some embodiments. Upon roaming the client device can negotiate the security parameters with encryption, thus increasing security.

Some embodiments of the present disclosure relate to a device including one or more circuits configured to perform operations. The operations include generating a nonce value used for encrypting a data frame communicated from the device to a second device. The nonce value includes a direction component indicating the device is an access point or indicating the second device is the access point and a frame type component indicating a type for the data frame. The operations also include encrypting the data frame using at least the nonce value and a key of the device and the second device and transmitting the data frame to at least the second device.

A nonce refers to a value designed to only be used once during some period or within some context in some embodiments. For example, a nonce value may refer to a value communicated by either the connecting device or the access point and used to generate a transient key in some embodiments. A nonce value may also refer to a value used to initialize an encryption algorithm (e.g., a counter mode with cipher block chaining message authentication code or a Galois/counter mode protocol) and protect against data frame replay attacks. Encrypting a data frame refers to using one or more keys/nonces to render unintelligible the data contained in the data frame by anyone or any device that does not know the keys/nonces used to encrypt the data frame in some embodiments. For example, encrypting a data frame may refer to executing the advanced encryption standard (AES) algorithm on the payload of the data frame.

A data frame refers to a unit of data transmission at the data link layer in some embodiments. For example, a data frame may refer to a container that envelops a data packet with the information required to transmit the information over a wireless data link. A frame type refers to the type of information that is carried by a data frame in some embodiments. For example, a frame type may refer to a code or binary sequence that distinguishes a data frame enveloping data from a management frame requesting a specific action at the data link layer. An access point refers to a device that allows wireless devices to connect to a wired network in some embodiments. For example, an access point may refer to a hardware device that acts as a communication hub for users of a wireless device to connect to a local area network (LAN) or the Internet.

In some embodiments, the nonce value also includes a transmitter identifier component generated from an address of a transmitter of the data frame.

In some embodiments, the nonce value also includes a packet number that maintains continuity within a mobility domain for the device.

In some embodiments, at least a portion of the nonce value is generated using a hash function.

In some embodiments, the nonce value also includes a roam count component indicating a number of times the device or the second device has roamed to or attempted to roam to a different access point.

In some embodiments, the nonce value also includes a packet number that is reset upon establishing a connection after a roam.

An address refers to an identifier assigned to a device for use as a network address in communications within a network segment in some embodiments. For example, an address may refer to a hardware address that uniquely identifies each device on a network or to an address provided to the device at a time it connects to the network. A packet number refers to an identifier of a particular packet in some embodiments. For example, a packet number may refer to a number included in a nonce for encrypting a data frame that increments each time a new packet is sent. A packet number that maintains continuity refers to an identifier of a particular packet that is shared between access points in a mobility domain and continues after connecting to a different access point in the same mobility domain in some embodiments. A mobility domain refers to a group of access points enabled for seamless roaming of clients within the domain in some embodiments. For example, a mobility domain may refer to a network configuration that allows wireless devices to move between access points, ensuring continuous and secure communication. A hash function refers to a mathematical algorithm that transforms an input to an output with a fixed number of bits in some embodiments. For example, a hash function may take an input such as a password or address and produce a unique output representing the original data. Roaming refers to a wireless device moving between access points while maintaining network connectivity in some embodiments. For example, a roam may refer to the transition from one access point to another. Establishing a connection refers to the process by which a wireless device connects to a wireless network in some embodiments. For example, establishing a connection may refer to a sequence of steps including scanning for available networks, authenticating with an access point, and negotiating encryption parameters and/or keys, to enable the device to communicate with the access point and on the network.

In some embodiments, the operations also include storing the roam count component last used by the device and verifying the roam count component is greater than the roam count component last used by the device on a subsequent connection by the second device.

In some embodiments, the operations also include generating the key of the device and the second device using a Diffie-Hellman key exchange.

Some embodiments of the present disclosure relates to a device including one or more circuits configured to perform operations. The operations include establishing a connection with a first access point of a plurality of access points on a wireless network. The operations also include generating a first transient key for the first access point. The operations also include generating a second transient key, different from the first transient key, for a second access point of the plurality of access points. The operations also include transitioning the connection with the first access point to the second access point and encrypting an earliest-occurring data frame communicated to the second access point after transitioning the connection using the second transient key.

An earliest-occurring data frame communicated after transitioning to the second access point may refer to a message that is sent for the purposes of establishing a secure connection to the second access point in some embodiments. For example, the earliest-occurring data frame may refer to a link setup or switch request. The earliest-occurring data frame may also include one or more keys or portions of a nonce used for encryption, for example, a temporal key, an ephemeral key, a packet number, etc. It is contemplated that, after the transition of a connection from a first access point to a second access point, the second access point or the connecting non-access point station may perform transmissions where encryption is not necessary or beneficial.

For example, general information related to the access point, such as information that is included in a beacon frame, may not be encrypted. Such intervening transmissions may not be considered or affect an earliest-occurring data frame from referring to a message for establishing a secure connection. In addition, transmissions from other access points or other devices, or to other devices or access points not involved in the setup of the new connection, may not be considered.

In some embodiments, generating the first transient key includes using a Diffie-Hellman key exchange and generating the second transient key includes using the Diffie-Hellman key exchange.

In some embodiments, encrypting the earliest-occurring data frame also uses a nonce value including a direction component indicating the device is not an access point and a frame type component indicating a type for the earliest-occurring data frame.

In some embodiments, generating the second transient key includes executing a key generation function using an ephemeral key generated using the Diffie-Hellman key exchange.

In some embodiments, generating the first transient key and the second transient key includes executing a key generation function using a nonce value for the first access point and the second access point.

In some embodiments, transitioning the connection with the first access point to the second access point is responsive to the connection to the first access point having a drop in signal strength or a disconnection.

A Diffie-Hellman key exchange (e.g., algorithm) refers to a method for securely exchanging cryptographic keys over a public channel in some embodiments. For example, the Diffie-Hellman algorithm may refer to a mathematical formula (e.g., technique or equation) that allows two parties to generate a shared secret key, without exposing the key itself or the ability to generate the key to a third party. A transient key refers to a cryptographic key used to encrypt data in some embodiments. For example, a transient key may refer to a pairwise transient key that includes a temporal key for data encryption in some embodiments. A key generation function refers to a function or formula that creates keys for securing wireless communications in some embodiments. For example, a key generation function may refer to a key derivation function that uses a shared key and a nonce to generate a cryptographic key. An ephemeral key refers to a provisional key that is used to generate cryptographic keys in some embodiments. For example, an ephemeral key may refer to a key generated by the Diffie-Hellman algorithm and used to generate a transient key.

Some embodiments of the present disclosure relate to a device including one or more circuits configured to perform operations. The operations include receiving a request from a client device to generate a transient key from an access point with which the client device has established a connection. The operations also include communicating parameters for generating the transient key with the client device via the access point. The operations also include generating the transient key using the parameters. The operations also include receiving an earliest-occurring data frame communicated from the client device after the client device has transitioned the connection from the access point to the device and decrypting the earliest-occurring data frame using the transient key.

In some embodiments, generating the transient key includes using a Diffie-Hellman key exchange.

In some embodiments, decrypting the earliest-occurring data frame also uses a nonce value that includes a direction component indicating the device is a second access point and a frame type component indicating a type for the earliest-occurring data frame.

In some embodiments, generating the transient key includes executing a key generation function using an ephemeral key generated using the Diffie-Hellman key exchange.

In some embodiments, generating the transient key includes executing a key generation function using a nonce value.

In some embodiments, transitioning the connection with the access point to the device is responsive to the connection to the access point having a drop in signal strength or a disconnection.

**Communications Network**

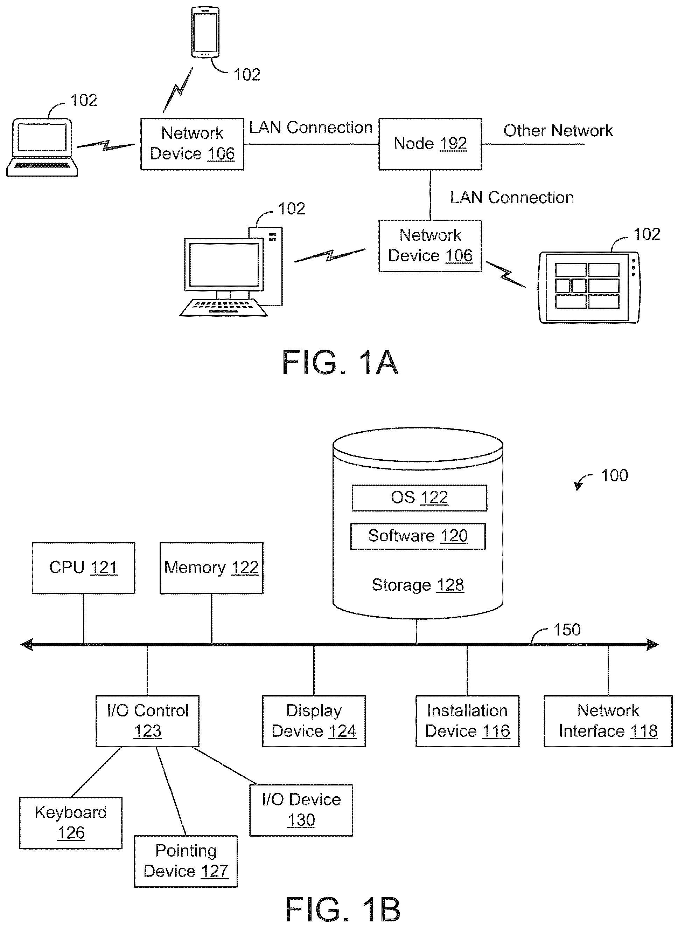

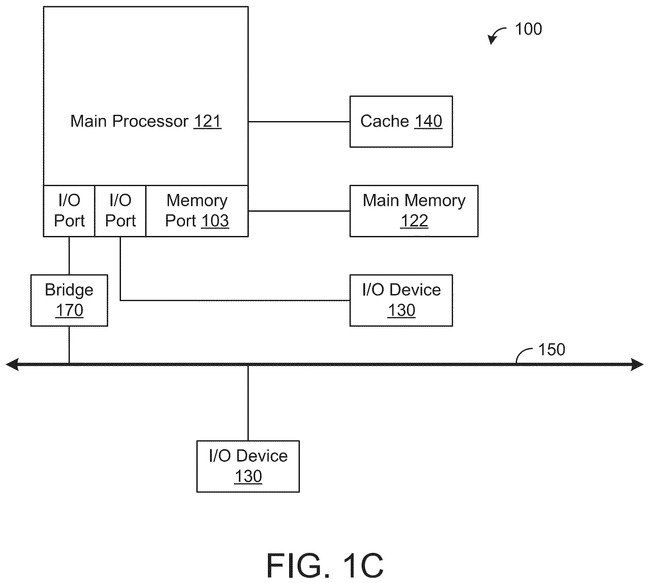

Prior to discussing certain embodiments, it can be helpful to describe aspects of the operating environment as well as associated system components (e.g., hardware elements) in connection with the methods and systems described herein. Referring to FIG. 1A, an embodiment of a network environment is depicted. In brief overview, the network environment includes a wireless communication system that includes one or more access points (APs) or network devices 106, one or more stations or wireless communication devices 102 and a network hardware component or network hardware 192. The wireless communication devices 102 can, for example, include laptop computers, tablets, personal computers, and/or cellular telephone devices. The details of an embodiment of each station or wireless communication device 102 and AP or network device 106 are described in greater detail with reference to FIGS. 1B and 1C. The network environment can be an ad hoc network environment, an infrastructure wireless network environment, a subnet environment, etc. in one embodiment. The network devices 106 or APs can be operably coupled to the network hardware 192 via local area network connections. Network devices 106 are 5G base stations in some embodiments. The network hardware 192, which can include a router, gateway, switch, bridge, modem, system controller, appliance, etc., can provide a local area network connection for the communication system. Each of the network devices 106 or APs can have an associated antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

In some embodiments, a network device 106 or AP includes a device or module (including a combination of hardware and software) that allows wireless communication devices 102 to connect to a wired network using wireless-fidelity (WiFi), or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect to a router (e.g., via a wired network) as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other devices 102 to utilize that wired connection. A network device 106 or AP can be implemented to support a standard for sending and receiving data using one or more radio frequencies. Those standards, and the frequencies they use can be defined by the IEEE (e.g., IEEE 802.11 standards). A network device 106 or AP can be configured and/or used to support public Internet hotspots, and/or on a network to extend the network's Wi-Fi signal range.

In some embodiments, the access points or network devices 106 can be used for (e.g., in-home, in-vehicle, or in-building) wireless networks (e.g., IEEE 802.11, Bluetooth, ZigBee, any other type of radio frequency based network protocol and/or variations thereof). Each of the wireless communication devices 102 can include a built-in radio and/or is coupled to a radio. Such wireless communication devices 102 and/or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 102 and access point(s) or network devices 106 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 102 or network device 106. As shown in FIGS. 1B and 1C, each computing device 100 includes a processor 121 (e.g., central processing unit), and a main memory unit 122. As shown in FIG. 1B, a computing device 100 can include a storage device 128, an installation device 116, a network interface 118, an I/O controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more input/output devices 130a-130n, and a cache memory 140 in communication with the central processing unit or processor 121.

The central processing unit or processor 121 is any logic circuitry that responds to and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus 150. Various buses can be used to connect the central processing unit or processor 121 to any of the I/O devices 130, for example, a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system 100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, trackpads, trackballs, microphones, dials, touch pads, touch screen, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, USB device, hard-drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.11ad, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a FibreChannel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smart phone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

**Wireless Device**

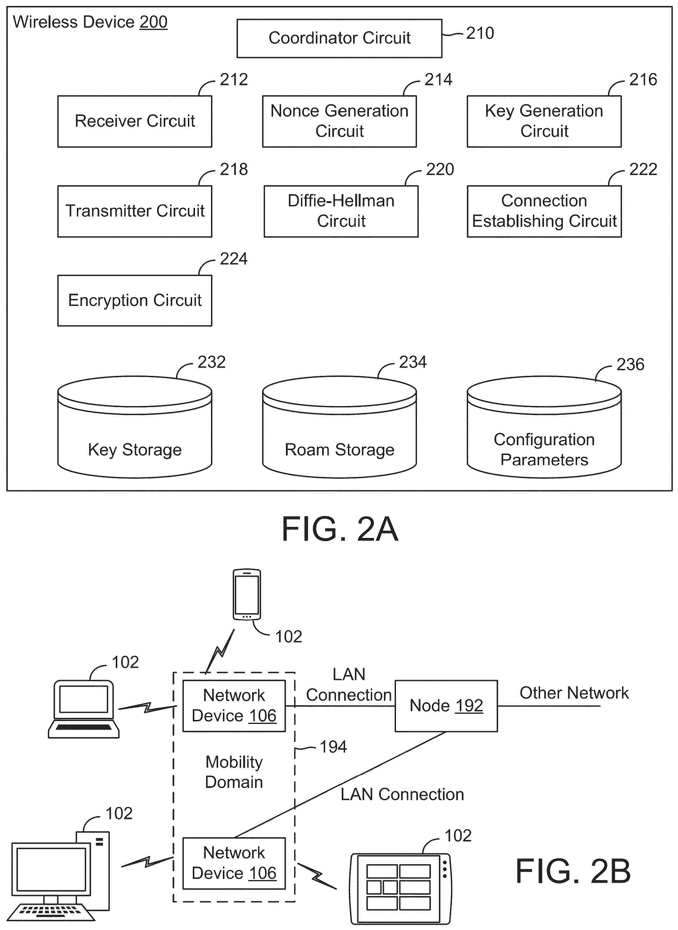

FIG. 2A is an illustrative block diagram of circuitry within a wireless device 200. The wireless device 200 may be part of the network environment shown in FIG. 1A. In some embodiments, the wireless device 200 implements a network device 106 providing wireless access to the LAN. In some embodiments, the wireless device 200 implements a wireless communication device 102 and connects to the network device 106 to acquire wireless access to the LAN. The wireless device 200 may include a number of circuits configured to enhance security of the communications between a wireless communication device 102 and the network devices 106. The circuits may provide enhanced security during roaming between various network device 106 of a mobility domain. The circuitry, for example, may be implemented by any of the devices connected to or communicating with the networks shown in FIG. 1A. For example, the circuitry may be implemented within network device 106 and used to communicate with any user device 102. In some embodiments, the circuitry may be implemented using one or more memory devices storing instructions to be executed by one or more processors. In some embodiments, the circuitry may be implemented using application specific integrated circuits (ASIC), digital signal processing (DSP) integrated circuits, or a system on a chip integrated circuit.

The processors may be a general purpose or specific purpose processors, an application specific integrated circuit (ASIC), one or more field programmable gate arrays (FPGAs), a DSP circuit, a group of processing components, or other suitable processing components. The processors may be configured to execute computer code and/or instructions stored in the memories or received from other computer readable media (e.g., CDROM, network storage, a remote server, etc.). The processors may be configured in various computer architectures, such as graphics processing units (GPUs), distributed computing architectures, cloud server architectures, client-server architectures, or various combinations thereof. One or more first processors can be implemented by a first device, such as an edge device, and one or more second processors can be implemented by a second device, such as a server or other device that is communicatively coupled with the first device and may have greater processor and/or memory resources.

The memories may include one or more devices (e.g., memory units, memory devices, storage devices, etc.) for storing data and/or computer code for completing and/or facilitating the various processes described in the present disclosure. The memories may include random access memory (RAM), read-only memory (ROM), hard drive storage, temporary storage, non-volatile memory, flash memory, optical memory, or any other suitable memory for storing software objects and/or computer instructions. The memories may include database components, object code components, script components, or any other type of information structure for supporting the various activities and information structures described in the present disclosure. The memories may be communicably connected to the processors and can include computer code for executing (e.g., by the processors) one or more processes described herein.

The wireless device 200 includes several interconnected circuits according to some embodiments. The wireless device 200 may include a receiver circuit 212, a nonce generation circuit 214, a key generation circuit 216, a transmitter circuit 218, a Diffie-Hellman circuit 220, a connection establishing circuit 222, and an encryption circuit 224. The wireless device 200 may also include memory to store variables and properties used by the circuits. The wireless device 200 may include key storage 232, roam storage 234, and configuration parameter storage 236. It should be understood that in some embodiments the functionality of the wireless device 200 may be distributed differently across any number of circuits. For example, the functionality of the nonce generation circuit 214 and the key generation circuit 216 may be performed in a single circuit.

In some embodiments, the wireless device 200 also includes a coordinator circuit 210 configured to control the timing and flow of data through the other circuitry of the wireless device 200. For example, the coordinator circuit may cause the modules or circuits to execute in a specific order to perform the overall functionality of the wireless device 200. In some embodiments, the coordinator circuit 210 may route the information and/or outputs of other circuits or modules that are dependent on the information or use the information as an input. For example, the coordinator circuit 210 may cause the nonce generation circuit 214 to generate a nonce according to the methods and configurations described herein and then input the nonce to the key generation circuit 216 to generate a temporal encryption key.

In some embodiments, the wireless device 200 includes a receiver circuit 212 to receive electromagnetic transmissions by way of an antenna. The receiver circuit 212 may also amplify the received signal for processing. The receiver circuit 212 may be configured to decode the transmission waveform into a number of digital bits of a data frame. The decoder may, for example, decode an orthogonal frequency domain multiple access (OFDMA) signal by first demodulating the signal, performing a fast Fourier transform (FFT) to obtain a number of symbols including a phase and magnitude at various sub-carrier frequencies. The symbols may be compared to a constellation diagram to determine the associated binary sequence.

In some embodiments, the wireless device 200 includes a transmitter circuit 218 to transmit electromagnetic transmissions by way of an antenna. The transmitter circuit 218 may also amplify the signal prior to transmitting the signal. The transmitter circuit 218 encodes the binary data into a communication signal and modulate the signal at a carrier frequency prior to transmission. In some embodiments, the binary data is encoded by first translating a number of bits into a phase and magnitude associated with a number of sub-carrier frequencies and then transformed into the time domain using an inverse FFT. The signal can then be modulated at the carrier frequency and transmitted.

The receiver circuit 212 and the transmitter circuit 218 provide the wireless device 200 with the ability to communicate wirelessly. Wireless communications may be received by other devices in the area. To prevent unwanted recovery of the communication and/or tampering with the communication by a man-in-the-middle (MITM) attack the communications are encrypted. The communication may be encrypted using a transient key and a nonce. The nonce may be combined with the transient key to perform encryption. For example, the nonce may be used as an initialization vector for the encryption algorithm. Reuse of nonce values can compromise the encryption allowing an unwanted threat actor to decode the message. Nonce values may be managed by the wireless device 200 (e.g., an access point or a connecting client device).

As shown in FIG. 2B, the network devices 106 (e.g., operating as access points) may provide a mobility domain 194 within which a wireless communication device 102 can rapidly transition from one access point to another access point (e.g., if a connection is disrupted or signal strength drops). Maintaining security while roaming to other access points produces additional considerations when generating the nonce values for encryption and/or when deriving the transient keys.

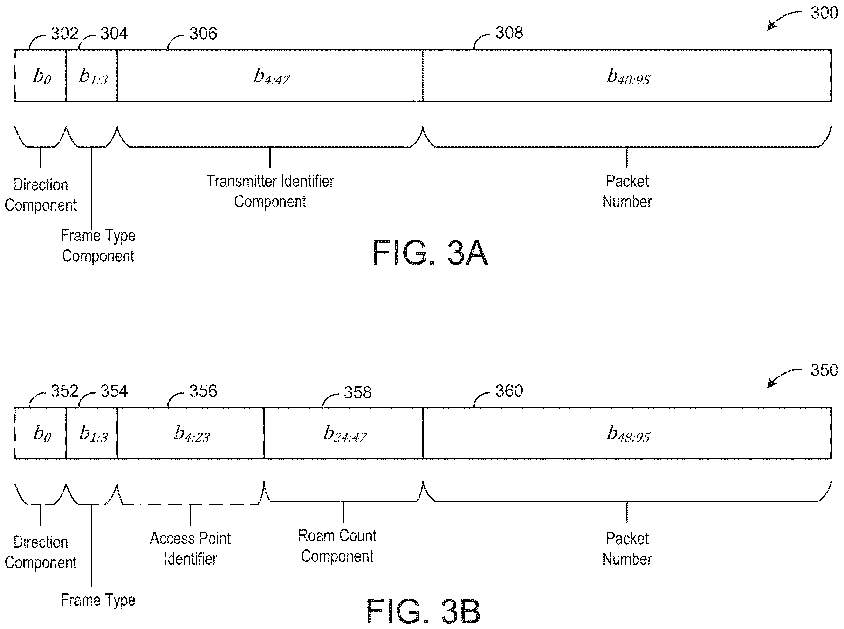

The nonce generation circuit 214 may be configured to generate nonces with reduced probability of repeating while roaming to enhance security. A nonce may be generated by including two components: a fixed portion (e.g., a prefix, etc.) and an invocation portion (e.g., a packet number). The nonce generation circuit 214 may be configured to generate nonces according to a number of guidelines: (i) for a given transient key two distinct devices shall not use the same fixed portion, (ii) for a given transient key two distinct sets of inputs shall not share the same invocation portion, (iii) the number of times a nonce is used with different keys should be reduced (e.g., minimized). To follow the guidelines the nonce generation circuit 214 may generate nonces according to the form shown in nonce 300 in FIG. 3A and nonce 350 in FIG. 3B.

With reference to the FIG. 3A, the portions of the nonce 300 are shown, according to some embodiments. The particular nonce type used may depend on the parameters of the wireless device 200 (e.g., stored in configuration parameter storage 236) included in the connection request, etc. The nonce type of the nonce 300 may be of particular use in centralized mobility domains or network architectures, for example, when a packet number component of the invocation portion of the nonce maintains continuity across multiple access points when roaming occurs. The nonce generation circuit 214 may generate a nonce according to the portions or fields of the nonce 300 depicted in FIG. 3A.

The nonce 300 includes a direction component 302, a frame type component 304, a transmitter identifier component 306, and a packet number component 308. The direction component 302, the frame type component 304, and the transmitter identifier component 306 may be included in the fixed portion and the packet number component 308 may be included in the invocation field. The direction component 302 may be a single bit indicating the direction of the transmission. For example, a binary '0' may represent that the transmitter is the access point, whereas a binary '1' may represent that the transmitter is not an access point (e.g., a non-access point station). The frame type component 304 may be a sequence of three bits (e.g., bits 1-3) indicating the type of frame. For example, the binary sequence '001' may be used for a control frame and/or the binary sequence '010' may be used for a data frame. The transmitter identifier component 306 may be a hash function of the transmitter address (e.g., MAC address). The hash function may convert the address into a 44-bit (e.g., bits 4-47) binary sequence. The packet number component 308 may be a number that increments with each frame transmission. For example, the packet number component 308 may be a 48-bit binary sequence representing the incrementing number.

The nonce 300 may satisfy the guidelines of nonce generation. For example, even in the unlikely event of a hash collision (e.g., two devices have an address that generates the same 44-bit sequence, the direction will be different for the two devices. For a given transient key, only one device may act as the access point. The transient key may be regenerated prior to the packet number component 308 wrapping (e.g., rolling over, resetting, etc.). Regenerating the transient key may ensure that a particular value of the packet number component 308 is not used for a single transient key.

With reference to the FIG. 3B, the portions of the nonce 350 are shown, according to some embodiments. The particular nonce type used may depend on the parameters of the wireless device 200 (e.g., stored in configuration parameter storage 236) included in the connection request, etc. The nonce type of the nonce 350 may be of particular use in distributed mobility domains or network architectures, for example, when a packet number component of the invocation portion of the nonce does not maintain continuity across multiple access points when roaming occurs (e.g., the packet number may be reset after a roam). The nonce generation circuit 214 may generate a nonce according to the portions or fields of the nonce 350 depicted in FIG. 3B.

The nonce 350 includes a direction component 352, a frame type component 354, an access point identifier component 356, a roam count component 358, and a packet number component 360. The direction component 352, the frame type component 354, and the access point identifier component 356 may be included in the fixed portion and the roam count component 358 and packet number component 360 may be included in the invocation field. The direction component 352 may be a single bit indicating the direction of the transmission. For example, a binary '0' may represent that the transmitter is the access point, whereas a binary '1' may represent that the transmitter is not an access point (e.g., a non-access point station). The frame type component 354 may be a sequence of three bits (e.g., bits 1-3) indicating the type of frame. For example, the binary sequence '001' may be used for a control frame and/or the binary sequence '010' may be used for a data frame. The access point identifier component 356 may represent a unique identifier of the access point within the mobility domain. For example, the access point identifier component 356 may be a 20-bit binary sequence representing an integer identifier for the access point and allowing over a million access points with unique identifiers in the same mobility domain. The roam count component 358 may represent an integer that is incremented each time a roam is attempted by the non-access point device (e.g., a wireless communication device 102). For example, the roam count component 358 may be a 24-bit binary sequence (e.g., bits 24-47) representing the total number of roam attempts since the transient key was created. The packet number component 360 may be a number that increments with each frame transmission. For example, the packet number component 360 may be a 48-bit binary sequence representing the incrementing number.

In some embodiments, the packet number component 360 of the nonce 350 is reset after the initial connection and each time the access point facilitating the connection changes (e.g., after a roam). When a roam occurs, the roam count component 358 may be sent by the connecting device (e.g., the non-access point station) to the access point in an encrypted message. The roam count component 358 may be used in subsequent communications until the next roam occurs.

In some embodiments, a replay counter is maintained to perform replay detection during a current connection between the non-access point station and the access point (e.g., implemented by a wireless device 200). The replay counter may use the packet number component 360 to perform replay detection. The packet number component 360 may be sufficient for replay detection because communications using an incorrect roam count component 358 may fail to decrypt the message (the nonce 350 would be incorrect if the roam count component 358 is incorrect).

In some embodiments, the wireless device 200 implements an access point (e.g., the network device 106) and the roam count component 358 is initialized (e.g., to zero) when the transient key is established. The last roam count component 358 used may be stored by the wireless device 200, for example, in the roam storage 234. Upon a subsequent connection request to the wireless device 200, the wireless device 200 may be configured to ensure that the roam count component 358 has a value that is strictly larger than the stored value it was using during the previous connection. A duplicated roam count component 358 may be indicative of a replay attack. For example, a replay attack may use the roam request and/or response messages used to establish a connection, but would not be able to encrypt the data with a modified nonce taking into account the increased roam count component 358.

The nonce 300 may satisfy the guidelines of nonce generation. The tuple of the direction component 352 and the access point identifier component 356 may be unique to a device ensuring that the fixed field (e.g., portion) is unique. The packet number component 360 may reset after roaming or be managed individually by each device; however, the tuple including the packet number component 360 and the roam count component 358 may ensure that the nonce 350 is unique.

The sizes and order of the components of the nonce 300 and the nonce 350 may be different from those depicted in FIGS. 3A and 3B. For example, the frame type component 304 may include bits 0-2 while the direction component may be bit 3. Additionally or alternatively, the size of an identifier component (e.g., the transmitter identifier component 306 and/or the access point identifier component 356) may be larger than the size depicted. The whole address may be used (e.g., the 48-bit MAC address). In some embodiments, the total size of the fixed portion of the nonce is greater than 48 bits. The components of the fixed portion may be passed through a hash with an output of the desired size. For example, the hash may output a fixed 48-bit size. Alternatively, some components of a nonce may be passed through a hash with a fixed length output equal to the difference between the desired size and the size of the components not passed through the hash function. For example, the frame type component 354 and the access point identifier may be passed through a 23-bit output hash function while the direction component 352 is left unmodified. A different output size of the hash may be chosen if a different size for any of the other components were selected, for example, if the roam count size were reduced to 10 bits the size of the hash function output may be increased to 33 bits.

The key generation circuit 216 may be configured to generate the transient key. The key generation circuit 216 may be configured to generate the transient key using a master key, addresses of the connecting device, (e.g., if the wireless device 200 is an access point) or access point (e.g., if the wireless device 200 is not the access point), and nonces generated by the wireless device 200 and the other device. Additionally or alternatively, the key generation circuit 216 may generate the transient key using an ephemeral public key. The ephemeral public key used to generate the transient key may be derived from a Diffie-Hellman key exchange algorithm. The ephemeral public key may be used as part of the key generation function in addition to or as an alternative to the nonces. The key generation circuit 216 may generate a number of keys. For example, the transient key may include a key confirmation key a key encryption key, and a temporal key. In some embodiments, the transient key may include a message integrity code key. The key generation circuit 216 may also be configured to generate the group keys for multicast data frames. The keys generated by the key generation circuit 216 may be stored in the key storage 232.

In some embodiments, the key generation circuit 216 determines a time to regenerate the keys (e.g.,

the transient key). The key generation circuit 216 may monitor the nonce values and cause the keys to be regenerated if a future nonce may duplicate a past nonce used for the same key if generated according to the rules described with reference to FIGS. 3A and 3B. For example, the key generation circuit 216 may cause the keys to be regenerated before the packet number component 308 or 360 rolls over. Additionally or alternatively, the key generation circuit 216 may decide to cause the keys to be regenerated after a time period has elapsed, after a certain number of roams, after a certain number of data frames have been sent, or any function thereof. In some embodiments, the key generation circuit 216 monitors for opportunistic times to regenerate the keys (e.g., when data transfer is not occurring or less data is being communicated). Delays associated with regenerating the keys (e.g., sending nonces, generating ephemeral keys, etc.) may be avoided during high priority data transfer (e.g., video call, video stream, etc.) and/or when a roam occurs. In some embodiments, the packet number is reset when a new key is generated.

The Diffie-Hellman circuit 220 may be configured to perform a Diffie-Hellman key exchange algorithm in some embodiments. For example, the Diffie-Hellman circuit 220 may generate an ephemeral public key used by the key generation circuit 216 to generate a transient key. During the Diffie-Hellman key exchange algorithm a public key including a prime number, *p,* and a base (or primitive root), g, may be used by both connecting devices (e.g., implementations of the wireless device 200) to generate ephemeral public keys. Each of the connecting devices may generate a random number (e.g., *a* for the non-access point station and *b* for the access point) and generate their ephemeral public key, for example, by:

$$k_a = \mathrm{mod}(g^a, p)$$

$$k_b = \mathrm{mod}(g^b, p),$$

where mod represents modulo division. A shared ephemeral key may be calculated by each of the connecting devices using:

$$k_S = \mathrm{mod}(k_b{}^a, p) = \mathrm{mod}\left(k_a{}^b, p\right).$$

In some embodiments, the Diffie-Hellman circuit 220 may be configured to generate keys when a connection is to be established. Using the Diffie-Hellman key exchange algorithm to generate keys may protect against attacks by a third party that knows the master key and could derive the transient key using the nonces and the master key if only nonces, the master key, and device address are used to determine the transient key. The Diffie-Hellman circuit 220 may provide the ephemeral keys to the key generation circuit 216 to generate the transient key for data encryption.

The connection establishing circuit 222 may be configured to send appropriate messages to establish a connection between the two devices. In some embodiments, the wireless device 200 implements an access point (e.g., the network device 106). The connection establishing circuit 222 may perform the 4-way handshake in order to generate the transient key (e.g., by providing a nonce). The circuit 222 may be configured with Extensible Authentication Protocol over LAN (EAPOL). The circuit 222 may communicate with an authentication server in order before allowing a connection to the connecting device. In some embodiments, the wireless device 200 implements a non-access point station (e.g., a wireless communication device 102) connecting to an access point. The circuit 222 may provide authentication details (e.g., challenge response, etc.) to the access point in order to prove that the wireless device 200 is authorized to be on the network. The circuit 222 may provide the results of the EAPOL process to the key generation circuit 216 in order to generate a master key that can be used to generate the transient keys during a handshake.

In some embodiments, the connection establishing circuit 222 is configured to establish a connection to a second access point of a mobility domain 194 (e.g., for a wireless device 200 implementing the connecting device). The circuit 222 may monitor the signal strength of various access points providing access to the network and transfer to the second access point of one or more criteria are met. For example, the connection establishing circuit 222 may cause a transfer to a second access point if the signal strength of the first access point drops below a threshold and/or the difference between the signal strength of the first access point and the second access point is greater than a second threshold (e.g., 10 dBm). In some embodiments, the one or more criteria for establishing a new connection depend on a current state of the wireless device 200 (e.g., is the wireless device 200 currently performing data transfer, etc.). For example, the second threshold may be increased if the wireless device 200 is actively transferring data. The connection establishing circuit 222 may also transition to a second access point the wireless device 200 becomes disconnected from the first access point.

After establishing a connection with the second access point, the connection establishing circuit 222 may perform the necessary operations to generate a transient key with the second access point. As described herein, the connection establishing circuit 222 may have negotiated keys with the second access point allowing for seamless transition to the second access point and the ability to encrypt the earliest message sent to the second access point.

The encryption circuit 224 may be configured to encrypt data frames prior to transmission by the transmitter circuit 218 and decrypt data frames received by the receiver circuit 212. The encryption circuit 224 may use the transient key and a nonce value to perform the encryption. For example, a temporal key from the transient key may be used in the encryption/decryption algorithm. The nonce may be used as an initialization vector for the encryption algorithm. For example, the nonce and the transient key may be used to generate a stream of keys, each key used to encrypt one block of data of the data frame. In some embodiments, the encryption circuit 224 uses a counter mode with cipher block chaining message authentication code (CCMP) encryption algorithm to encrypt and decrypt the data. Alternatively, the encryption circuit 224 may use a Galois/counter mode protocol (GCMP) algorithm to encrypt and decrypt the data.

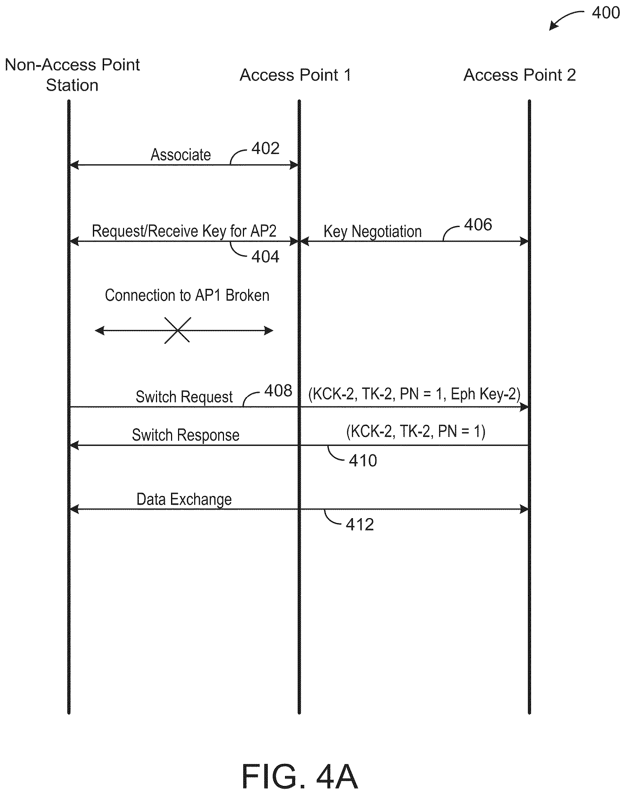

FIG. 4A shows a swimlane diagram 400 for pre-negotiating keys with a second access point to provide seamless transition during a roam. The swimlane diagram 400 shows a lane for the non-access point station (e.g. a wireless device 200 implementing a wireless communication device 102) and a first and second access point (e.g., a wireless device 200 implementing a network device 106). The messages illustrated by the swimlane diagram 400 may be of particular use for mobility domain configurations wherein the transient key is unique for each of the access points within the mobility domain 194 Association messages 402 are used to associate the non-access point station with the first access point. For example, the association messages 402 may include the EAPOL communications and/or a 4-way handshake to establish the transient key for communications between the first access point and the non-station access point.

After communication is established between the non-station access point and the first access point, the non-station access point may request keys from the second access point. The request for keys may be performed for each additional access point in the mobility domain 194. Alternatively, the request for keys may be performed for those access points that are proximate access point 1. For example, the request for keys may be performed for all access points having a signal that can be received by the non-access point station or all access points known to be a probable access point for a roam (e.g., a list of proximate access points stored in the configuration parameter storage 236). The request for keys may be included in the key negotiation messages 404. The first access point may relay the key negotiation messages 404 to the second access point so that keys can be generated in relayed messages 406. In some embodiments, the key negotiation messages 404 and the relayed messages 406 include sharing ephemeral public keys from a Diffie-Hellman key exchange (or parameters to generate such a key) that can be used by both the non-access point station and the second access point to generate an ephemeral shared key. In some embodiments, the key negotiation messages 404 and the relayed messages 406 include nonces to generate the keys used in communications between the non-access point station and the second access point. When nonces are used other devices on the network may be able to decrypt messages sent between the non-access point station and the second access point.

At some time the connection to the first access point is broken or the signal strength drops to a value that satisfies the criteria of the circuit 222 and the non-access point station decides to roam to another access point. Switch request messages 408 may be sent directly to the second access point using a transient key pre-generated from keys in the key negotiation messages 404 and the relayed messages 406. For example, the switch request messages 408 may be encrypted using a transient key generated from the key creation key, the temporal key, and an ephemeral key generated during the negotiations relayed through the first access point. In some embodiments, the packet number component 360 may be reset because the roam count component 358 can be used to protect against replay attacks. A switch response message 410 acknowledging the request and the encryption may be sent from the second access point. After the non-access point station has successfully transitioned to the second access point (e.g., after the switch response message 410), data exchange 412 can operate normally using the established transient key.

In some embodiments, the access points of a mobility domain share an ephemeral Diffie-Hellman key. The key negotiation messages 404 with the second access point through the first access point and the relayed messages 406 can be removed. The first access point may share the Diffie-Hellman parameters (e.g., generation parameters and the non-access point station's key) with the second access point so that the second access point can independently derive the ephemeral key. Additionally or alternatively, the ephemeral key derived by the first access point may be communicated to the second access point. After the connection is broken a transient key for the second access point may be generated by the non-access point station using a new ephemeral key for the non-access point station and the ephemeral key shared by the two access points. The transient key for the second access point can be used to protect the switch request messages 408. The new ephemeral key for the non-access point station may be communicated in the switch request messages 408 and used by the second access point to derive the transient key and decrypt the switch request messages 408.

In some embodiments, the ephemeral key for the second access point is communicated in a broadcasted beacon received by the non-station access point and/or in response to a probe request from the non-station access point. In response to receiving the ephemeral key, the non-station access point may generate a transient key for the second access point. During a roam the non-station access point may send a switch request with its ephemeral key so that the second access point can derive the appropriate transient key. The switch request may be encrypted with the transient key. Advantageously, the methods described with reference to FIG. 4A and the related variations allow for communications to be established with a small number of protected messages providing seamless roaming over the mobility domain.

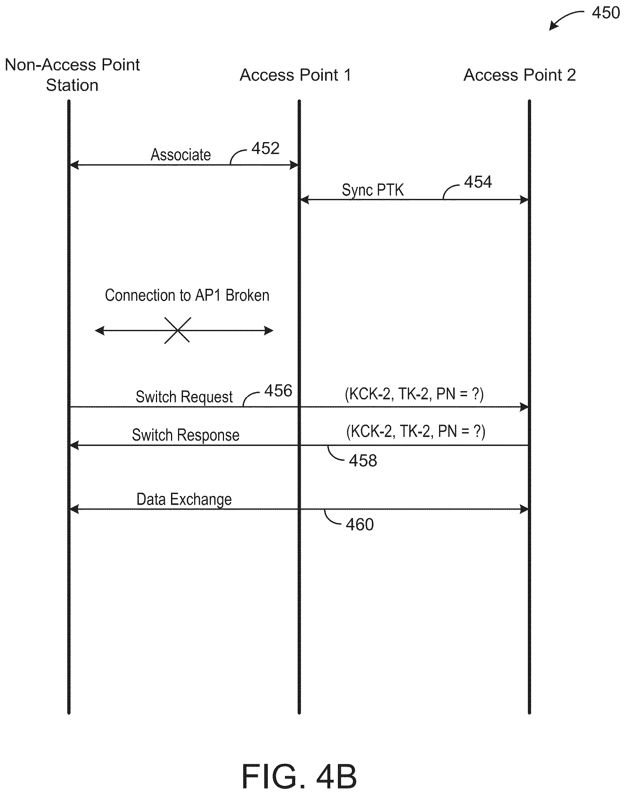

FIG. 4B shows a swimlane diagram 450 for pre-negotiating keys with a second access point to provide seamless transition during a roam. The swimlane diagram 450 shows a lane for the non-access point station (e.g. a wireless device 200 implementing a wireless communication device 102) and a first and second access point (e.g., a wireless device 200 implementing a network device 106). The messages illustrated by the swimlane diagram 450 may be of particular use for mobility domain configurations wherein the transient key is shared by access points within the mobility domain 194. Association messages 452 are used to associate the non-access point station with the first access point. For example, the association messages 452 may include the EAPOL communications and/or a 4-way handshake to establish the transient key for communications between the first access point and the non-station access point. After communication is established between the non-station access point and the first access point, the keys are synchronized with other access points in the mobility domain 194. For example, a synchronization message 454 having the transient key may be shared with the second access point.

In some embodiments, the association messages 452 include performing an Diffie-Hellman key exchange and communicating the ephemeral public keys that can be used to generate an ephemeral shared key. Alternatively, the nonces of the 4-way handshake may be used to generate the transient key without the ephemeral keys from a Diffie-Hellman key exchange. When nonces are used the key derivation function may use a derivation key and the nonce to generate temporal keys. Alternatively, the Diffie-Hellman key exchange may be performed to generate an ephemeral key for each of the connecting devices. The key derivation function may use the derivation key and the ephemeral key to generate the temporal key for data transfer. In either case, the transient keys and the temporal keys for encryption may be generated for each connecting device and shared across all access points within the mobility domain.

At some time the connection to the first access point is broken or the signal strength drops to a value that satisfies the criteria of the circuit 222 and the non-access point station decides to roam to another access point. Switch request messages 456 may be sent directly to the second access point using encryption based on the same transient key that was shared by the synchronization message 454. In some embodiments, the packet number component 360 may be reset because the roam count component 358 can be used to protect against replay attacks. Alternatively, the packet number component 308 with a nonce in the format of the nonce 300 may be used. A switch response message 458 acknowledging the request and the encryption may be sent from the second access point. After the non-access point station has successfully transitioned to the second access point (e.g., after the switch response message 458), data exchange 460 can operate normally using the transient key.

## Operational Flow Nonce Management and The Dynamic Diffie-Helman Key Exchange

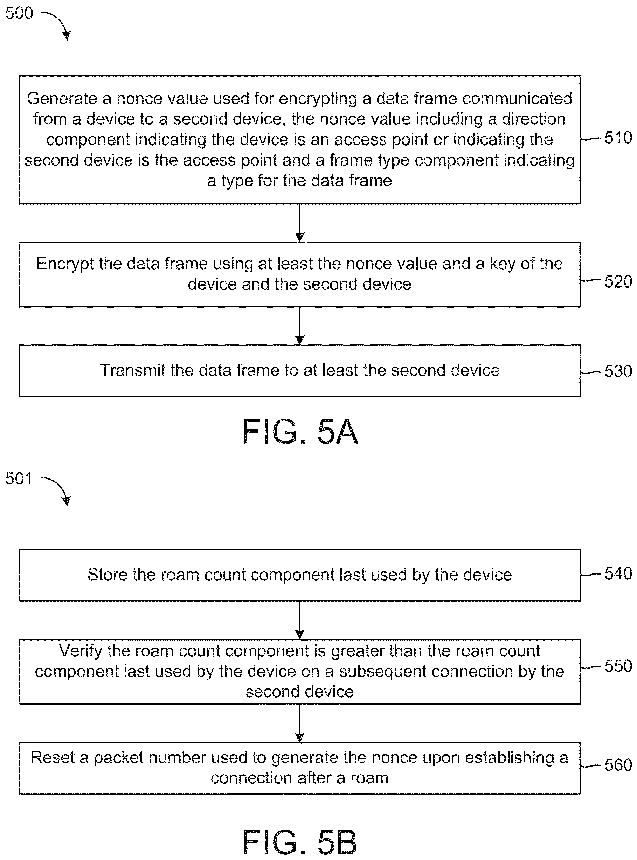

FIG. 5A shows a flow of operations 500 for transmitting data secured by encryption over a wireless connection according to some embodiments. The flow of operations 500 may include generating a nonce value used for encrypting a data frame communicated from a device (e.g., a wireless device 200 implementing either an access point or a non-access point station) to a second device (e.g., another wireless device 200 implementing the other device) in operation 510. The nonce value may include a direction component indicating the device is an access point or indicating the second device is the access point and a frame type component indicating a type for the data frame. For example, the nonce value may take the form of the nonce 300, additionally including the transmitter identifier component 306 and the packet number component 308. Alternatively, the nonce value may take the form of the nonce 350, additionally including the access point identifier component 356, the roam count component 358, and the packet number component 360. The operation 510 may be performed by the nonce generation circuit 214.

The flow of operations 500 may include encrypting the data frame using at least the nonce value and a key of the device and the second device in operation 520. The key of the device and the second device may be the transient key (e.g., a pairwise transient key). The transient key, for example, may be generated based on a master key, one or more additional nonce values exchanged between the device and the second device, and/or an ephemeral key derived during a Diffie-Hellman key exchange. The nonce value may be used as an initialization vector of an encryption algorithm with the transient key. The encryption algorithm may encrypt the data frame by applying, to each packet, an encryption key from a sequence of encryption keys generated using the transient key and the initialization vector (e.g. from the nonce value). Generating the key and encrypting the data may be performed by the key generation circuit 216 and the encryption circuit 224, respectively. The flow of operations 500 may include transmitting the data frame to at least the second device in operation 530. Transmitting the data may be performed by the transmitter circuit 218. For example, transmitting the data may include, converting sequences of the encrypted data into symbols including a phase and a magnitude for a number of sub-carrier frequencies, converting the symbols into a time domain waveform, and modulating the waveform at the carrier frequency.

FIG. 5B shows a flow of operations 501 for generating and verifying a roam count component 358 according to some embodiments. The flow of operations 501 may be performed by a wireless device 200 operating as (e.g., implementing) an access point. The flow of operations 501 may include storing the roam count component last used by the device in operation 540. The currently used roam count component 358 may be stored in the roam storage 234. After the connecting device roams away from the wireless device 200 the roam count component 358 may not update (e.g., the roam count component 358 may not be shared among the access points). The flow of operations 501 may include verifying the roam count component is greater than the roam count component last used by the device on a subsequent connection by the second device in operation 550. If the roam count has not incremented after a new message is received by the wireless device 200 (e.g., after a disconnection), this may be indicative of a replay attack and the message should be discarded. In some embodiments, the flow of operations 501 includes resetting a packet number used to generate the nonce upon establishing a connection after a roam in operation 560. The packet number may be used to ensure that a different nonce value is used for encryption of each packet and is incremented as each packet is sent/received. The reset of the packet number does not have to be explicit. For example, after a roam the access point a new connection is established with a second access point (e.g., implemented by the wireless device 200) and the packet number component 360 may be reset as part of the connection establishment. Resetting the packet number component 360 avoids as need to share the packet number component 360 between the access points of the mobility domain 194 while the roam count component 358 is used to protect against replay attacks in some embodiments.

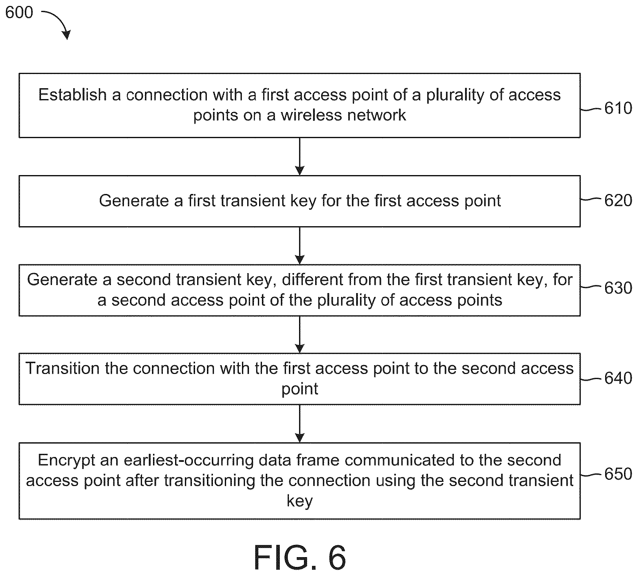

FIG. 6 shows flow of operations 600 for establishing a connection after a roam and encrypting the earliest-occurring messages after the roam according to some embodiments. For example, the earliest-occurring messages related to configuring a secure connection may be encrypted. The flow of operations 600 may be performed by a wireless device 200 operating as a connecting device (e.g., implementing a wireless communication device 102). The flow of operations 600 may include establishing a connection with a first access point of a plurality of access points on a wireless network in operation 610. For example, the operation 610 may be performed by the connection establishing circuit 222. Establishing a connection with the first access point may include executing the EAPOL to authenticate with the network and generate keys (e.g., a master key). The keys generated during the operation 610 may be used to generate a first transient key for the first access point in operation 620. The operation 620 may be performed by the key generation circuit 216 in some embodiments.

To provide a seamless and secure transition to a second access point of the mobility domain 194, the flow of operations 600 may include generating a second transient key, different from the first transient key, for a second access point of the plurality of access points in operation 630 in some embodiments. Generating the second transient key with the second access point includes performing communicating with the second access point through the first access point in some embodiments. For example, the first access point may relay the communications between the device establishing the connection and the second access point. The transient keys generated in the operation 620 and the operation 630 may be generated using nonces exchanged between the two devices and/or using an ephemeral key generated by the two devices.

At some point in time, the connection between the two devices (e.g., the first access point and the device establishing the connection) may be broken. The flow of operations 600 may include transitioning the connection with the first access point to the second access point in operation 640. For example, the transition may be performed responsive to the broken connection or to cause the broken connection due to poor signal strength, etc. Transitioning two a second access point may be requested by the connection establishing circuit 222. The flow of operations 600 may include encrypting an earliest-occurring data frame communicated to the second access point after transitioning the connection using the second transient key in operation 650. Because the transient key has already been established, the first message requesting the switch may be encrypted. Advantageously, the connection may be established with fewer messages and a shorter disruption of data transfer. Encryption may be performed by the encryption circuit 224. It is contemplated that in some embodiments one or more transmissions or messages not related to configuring the secure connection may not be encrypted. For example, messages by other devices not involved in this connection, transmission of beacon frames, and/or transmission of other information that need not be encrypted may occur after the transition of the connection and prior to the earliest-occurring data frame.

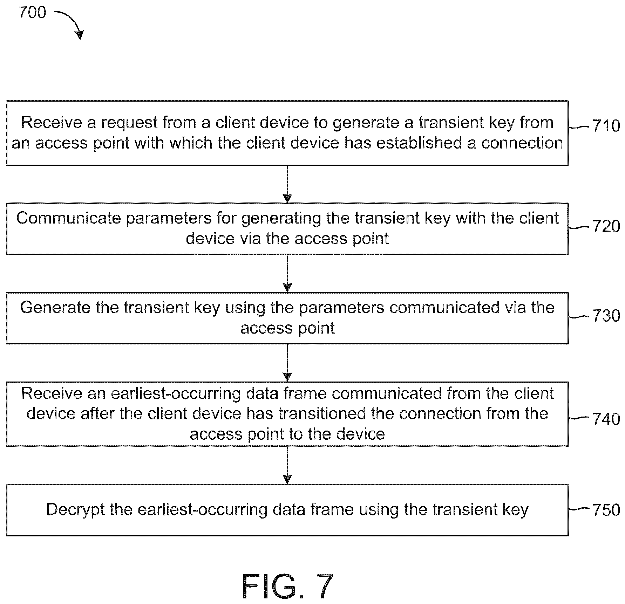

FIG. 7 shows flow of operations 700 for establishing a connection after a roam and encrypting the earliest-occurring messages after the roam according to some embodiments. For example, the earliest-occurring messages related to configuring a secure connection may be encrypted. The flow of operations 700 may be performed by a wireless device 200 operating as an access point (e.g., implementing a network device 106). The flow of operations 700 may include receiving a request from a client device (e.g., a connecting device) to generate a transient key from an access point with which the client device has established a connection in operation 710. The flow of operations 700 may include communicating parameters for generating the transient key with the client device via the access point in operation 720. The keys generated may be based at least upon one or more nonce values and/or an ephemeral key generated during a Diffie-Hellman key exchange. For example, the wireless device 200 may communicate a nonce, common parameters used to generate the ephemeral key using the Diffie-Hellman algorithm, and/or the ephemeral public keys generated by the Diffie-Hellman algorithm. The parameters communicated for the purposes of generating the transient key may depend on the configuration of the wireless device 200 and the key generation circuit 216. The flow of operations 700 may include generating the transient key using the parameters communicated via the access point in the operation 730.

At some point in time, the connection between the two devices (e.g., the access point through which communications were relayed through and the client device) may be broken. The flow of operations 700 may include receiving an earliest-occurring data frame communicated from the client device after the client device has transitioned the connection from the access point to the device in operation 740. Because the transient key has already been established, the first message requesting the switch may be encrypted. Advantageously, the connection may be established with fewer messages and a shorter disruption of data transfer in some embodiments. The flow of operations 700 may include decrypting the earliest-occurring data frame using the transient key in operation 750. Decryption may be performed by the encryption circuit 224. It is contemplated that in some embodiments one or more transmissions or messages not related to configuring the secure connection may not be encrypted. For example, messages by other devices not involved in this connection, transmission of beacon frames, and/or transmission of other information that need not be encrypted may occur after the transition of the connection and prior to the earliest-occurring data frame.

**Configuration of Exemplary Embodiments**

As utilized herein, the terms "approximately," "about," "substantially", and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The construction and arrangement of the systems and methods as shown in the various exemplary embodiments are illustrative only. Although only a few embodiments have been described in detail in this disclosure, many modifications are possible (e.g., variations in port or destination quantity, data types, methods of reinsertion, reintroduction, etc., values of parameters, arrangements, etc.). For example, the position of elements may be reversed or otherwise varied, the connections between elements may be direct or indirect, such that there may be one or more intermediate elements connected in between, and the nature or number of discrete elements or positions may be altered or varied. Accordingly, all such modifications are intended to be included within the scope of the present disclosure. The order or sequence of any process or method steps may be varied or re-sequenced according to alternative embodiments. Other substitutions, modifications, changes, and omissions may be made in the design, operating conditions, and arrangement of the exemplary embodiments without departing from the scope of the present disclosure. For example, the embodiments of the present disclosure may be implemented by a single device and/or system or implemented by a combination of separate devices and/or systems.

The term "or," as used herein, is used in its inclusive sense (and not in its exclusive sense) so that when used to connect a list of elements, the term "or" means one, some, or all of the elements in the list. Conjunctive language such as the phrase "at least one of X, Y, and Z," unless specifically stated otherwise, is understood to convey that an element may be either X, Y, Z; X and Y; X and Z; Y and Z; or X, Y, and Z (i.e., any combination of X, Y, and Z). Thus, such conjunctive language is not generally intended to imply that certain embodiments require at least one of X, at least one of Y, and at least one of Z to each be present, unless otherwise indicated.

References herein to the positions of elements (i.e., "top," "bottom," "above," "below") are merely used to describe the orientation of various elements in the FIGURES. It should be noted that the orientation of various elements may differ according to other exemplary embodiments, and that such variations are intended to be encompassed by the present disclosure.

Although the figures show a specific order of method steps, the order of the steps may differ from what is depicted. Also two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps, and decision steps.

The present disclosure contemplates methods, systems, and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer (i.e., ASICs or FPGAs) or any other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

**Claims**

1. A device comprising one or more circuits configured to perform operations comprising:

    generating a nonce value used for encrypting a data frame communicated from the device to a second device, the nonce value comprising:

      a direction component indicating the device is an access point or indicating the second device is the access point; and
      a frame type component indicating a type for the data frame;

    encrypting the data frame using at least the nonce value and a key of the device and the second device; and
    transmitting the data frame to at least the second device.

2. The device of claim 1, wherein
    the nonce value further comprises a transmitter identifier component generated from an address of a transmitter of the data frame.

3. The device of claim 2, wherein

the nonce value further comprises a packet number that maintains continuity within a mobility domain for the device.

4. The device of any one of the claims 1 to 3, wherein at least a portion of the nonce value is generated using a hash function.

5. The device of claim 1 or 2, wherein

    the nonce value further comprises a roam count component indicating a number of times the device or the second device has roamed to or attempted to roam to a different access point; wherein in particular
    the nonce value further comprises a packet number that is reset upon establishing a connection after a roam.

6. The device of claim 5, the operations further comprising:

    storing the roam count component last used by the device; and
    verifying the roam count component is greater than the roam count component last used by the device on a subsequent connection by the second device.

    storing the roam count component last used by the device; and
    verifying the roam count content is greater than the roam count component last used by the device on a subsequent connection by the second device.

7. The device of any one of the preceding claims, the operations further comprising
generating the key of the device and the second device using a Diffie-Hellman key exchange.

8. A device comprising one or more circuits configured to perform operations comprising:

    establishing a connection with a first access point of a plurality of access points on a wireless network;
    generating a first transient key for the first access point;
    generating a second transient key, different from the first transient key, for a second access point of the plurality of access points;
    transitioning the connection with the first access point to the second access point; and
    encrypting an earliest-occurring data frame communicated to the second access point after transitioning the connection using the second transient key.

**9.** The device of claim 8, wherein generating the first transient key comprises using a Diffie-Hellman key exchange and generating the second transient key comprises using the Diffie-Hellman key exchange.

**10.** The device of claim 9, wherein

encrypting the earliest-occurring data frame also uses a nonce value comprising a direction component indicating the device is not an access point and a frame type component indicating a type for the earliest-occurring data frame; and/or wherein generating the second transient key comprises executing a key generation function using an ephemeral key generated using the Diffie-Hellman key exchange.

**11.** The device of any one of the claims 8 to 10, wherein

generating the first transient key and the second transient key comprises executing a key generation function using a nonce value for the first access point and the second access point; and/or wherein transitioning the connection with the first access point to the second access point is responsive to the connection to the first access point having a drop in signal strength or a disconnection.

**12.** A device comprising one or more circuits configured to perform operations comprising:

receiving a request from a client device to generate a transient key from an access point with which the client device has established a connection; communicating parameters for generating the transient key with the client device via the access point; generating the transient key using the parameters; receiving an earliest-occurring data frame communicated from the client device after the client device has transitioned the connection from the access point to the device; and decrypting the earliest-occurring data frame using the transient key.

**13.** The device of claim 12, wherein generating the transient key comprises using a Diffie-Hellman key exchange.

**14.** The device of claim 13, wherein

decrypting the earliest-occurring data frame also uses a nonce value comprising a direction component indicating the device is a second access point and a frame type component indicating a type for the earliest-occurring data frame; and/or wherein generating the transient key comprises executing a key generation function using an ephemeral key generated using the Diffie-Hellman key exchange.

**15.** The device of any one of the claims 12 to 14, wherein

generating the transient key comprises executing a key generation function using a nonce value; and/or wherein transitioning the connection with the access point to the device is responsive to the connection to the access point having a drop in signal strength or a disconnection.

FIG. 1A

FIG. 1B

100

Main Processor 121 — Cache 140

| I/O Port | I/O Port | Memory Port 103 |

Main Memory 122

Bridge 170

I/O Device 130

150

I/O Device 130

FIG. 1C

FIG. 2A

FIG. 2B

EP 4 727 054 A1

300

302 304 306 308

| $b_0$ | $b_{1:3}$ | $b_{4:47}$ | $b_{48:95}$ |

Direction Component

Frame Type Component

Transmitter Identifier Component

Packet Number

FIG. 3A

350

352 354 356 358 360

| $b_0$ | $b_{1:3}$ | $b_{4:23}$ | $b_{24:47}$ | $b_{48:95}$ |

Direction Component

Frame Type

Access Point Identifier

Roam Count Component

Packet Number

FIG. 3B

FIG. 4A

450

Non-Access Point
Station                    Access Point 1          Access Point 2

Associate            452

Sync PTK            454

Connection to AP1 Broken

Switch Request        456        (KCK-2, TK-2, PN = ?)

Switch Response                  (KCK-2, TK-2, PN = ?)
                                 458

Data Exchange
                                 460

# FIG. 4B

500 ⌐

Generate a nonce value used for encrypting a data frame communicated from a device to a second device, the nonce value including a direction component indicating the device is an access point or indicating the second device is the access point and a frame type component indicating a type for the data frame ⌐510

Encrypt the data frame using at least the nonce value and a key of the device and the second device ⌐520

Transmit the data frame to at least the second device ⌐530

FIG. 5A

501 ⌐

Store the roam count component last used by the device ⌐540

Verify the roam count component is greater than the roam count component last used by the device on a subsequent connection by the second device ⌐550

Reset a packet number used to generate the nonce upon establishing a connection after a roam ⌐560

FIG. 5B

600

Establish a connection with a first access point of a plurality of access points on a wireless network — 610

Generate a first transient key for the first access point — 620

Generate a second transient key, different from the first transient key, for a second access point of the plurality of access points — 630

Transition the connection with the first access point to the second access point — 640

Encrypt an earliest-occurring data frame communicated to the second access point after transitioning the connection using the second transient key — 650

FIG. 6

700

Receive a request from a client device to generate a transient key from an access point with which the client device has established a connection — 710

Communicate parameters for generating the transient key with the client device via the access point — 720

Generate the transient key using the parameters communicated via the access point — 730

Receive an earliest-occurring data frame communicated from the client device after the client device has transitioned the connection from the access point to the device — 740

Decrypt the earliest-occurring data frame using the transient key — 750

FIG. 7

# EP 4 727 054 A1

## EUROPEAN SEARCH REPORT

**Application Number**

EP 25 20 7532

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/022033 A1 (HO SAI YIU DUNCAN [US] ET AL) 20 January 2022 (2022-01-20) | 1,2,4, 7-9, 11-15 | INV. H04L9/08 |
| A | * abstract * <br> * paragraphs [0058] - [0071] * <br> * figure 5 * <br> ----- | 3,5,6,10 | |
| A | WO 2024/026735 A1 (GUANGDONG OPPO MOBILE TELECOMMUNICATIONS CORP LTD [CN]) 8 February 2024 (2024-02-08) * the whole document * <br> ----- | 1-15 | |
| A | US 2013/243194 A1 (HAWKES PHILIP MICHAEL [AU] ET AL) 19 September 2013 (2013-09-19) * the whole document * <br> ----- | 1-15 | |
| A | Anonymous: "Cryptographic nonce", Wikipedia, 21 February 2012 (2012-02-21), XP055064170, Retrieved from the Internet: URL:http://en.wikipedia.org/w/index.php?title=Cryptographic_nonce&oldid=478031445 [retrieved on 2013-05-27] * the whole document * <br> ----- | 1 | |

| TECHNICAL FIELDS SEARCHED (IPC) |
|---|
| H04L <br> H04W |

The present search report has been drawn up for all claims

| Place of search | Date of completion of the search | Examiner |
|---|---|---|
| Munich | 11 December 2025 | Djokovic, Dusan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P4C01)

**EP 4 727 054 A1**

## ANNEX TO THE EUROPEAN SEARCH REPORT
## ON EUROPEAN PATENT APPLICATION NO.

EP 25 20 7532

11-12-2025

| Patent document cited in search report | | Publication date | Patent family member(s) | | Publication date |
|---|---|---|---|---|---|
| US 2022022033 | A1 | 20-01-2022 | TW | 202205910 A | 01-02-2022 |
| | | | US | 2022022033 A1 | 20-01-2022 |
| | | | US | 2024089730 A1 | 14-03-2024 |
| | | | WO | 2022015502 A1 | 20-01-2022 |
| WO 2024026735 | A1 | 08-02-2024 | CN | 119698793 A | 25-03-2025 |
| | | | EP | 4568162 A1 | 11-06-2025 |
| | | | JP | 2025525924 A | 07-08-2025 |
| | | | US | 2025175327 A1 | 29-05-2025 |
| | | | WO | 2024026735 A1 | 08-02-2024 |
| US 2013243194 | A1 | 19-09-2013 | CN | 103797830 A | 14-05-2014 |
| | | | EP | 2756696 A1 | 23-07-2014 |
| | | | ES | 2621990 T3 | 05-07-2017 |
| | | | HU | E031473 T2 | 28-07-2017 |
| | | | JP | 5739072 B2 | 24-06-2015 |
| | | | JP | 2014527379 A | 09-10-2014 |
| | | | KR | 20140066230 A | 30-05-2014 |
| | | | US | 2013243194 A1 | 19-09-2013 |
| | | | WO | 2013040046 A1 | 21-03-2013 |

EPO FORM P0459